# EUROPÄISCHE PATENTANMELDUNG

(11) **EP 1 990 523 A2**
(43) Veröffentlichungstag der Anmeldung: **12.11.2008**
(21) Anmeldenummer: 08008494.0
(22) Anmeldetag: 06.05.2008
(51) Int. Cl.: F02D 19/10

(54) **Brennkraftmaschine sowie Verfahren zum Betreiben einer Brennkraftmaschine**

(30) Priorität: 08.05.2007 DE 102007021477
(71) Anmelder: Daimler AG, 70327 Stuttgart (DE)
(72) Erfinder: Bertram, Christoph, Dr., 73547 Lorch (DE); Freisinger, Normann, 73547 Lorch (DE); Rössler, Klaus, 70499 Stuttgart (DE); Klenk, Martin, 71522 Backnang (DE)

(57) **Zusammenfassung**

Die Erfindung betrifft eine Brennkraftmaschine, umfassend einen Brennraum (2), ein Saugrohr (3, 3a), wenigstens ein Einlassventil (6), wenigstens ein Auslassventil (7), eine Gaseinblaseinrichtung (4), welche am Brennraum (2) zum direkten Einblasen eines Brenngases in den Brennraum (2) angeordnet ist, und eine Kraftstoffeinspritzeinrichtung (5), welche am Saugrohr (3, 3a) zur Einspritzung eines flüssigen Kraftstoffs in das Saugrohr angeordnet ist. Ferner betrifft die Erfindung ein Verfahren zum Betreiben einer Brennkraftmaschine.

## Beschreibung

### Stand der Technik

Die vorliegende Erfindung betrifft eine Brennkraftmaschine mit einer Einblaseinrichtung für gasförmige Kraftstoffe und einer Einspritzeinrichtung für flüssigen Kraftstoff. Ferner betrifft die Erfindung ein Verfahren zum Betreiben einer Brennkraftmaschine.

Brennkraftmaschinen sind aus dem Stand der Technik in unterschiedlichsten Ausgestaltungen bekannt. Hierbei sind beispielsweise Erdgasmotoren für Kraftfahrzeugantriebe bekannt, welche als bivalente Motoren ausgelegt sind, d.h. dass sie sowohl für den Betrieb mit Erdgas als auch für den Betrieb mit Benzin geeignet sind. Für derartige bivalente Erdgasmotoren wird eine äußere Gemischbildung gewählt. Hierdurch können die bekannten bivalenten Motoren jedoch nicht die durch in jüngster Zeit verstärkt eingesetzte Benzindirekteinspritzung möglichen Reduzierungen bei Verbrauch und Emission erreichen.

### Vorteile der Erfindung

Die erfindungsgemäße Brennkraftmaschine mit den Merkmalen des Patentanspruchs 1 weist demgegenüber den Vorteil auf, dass sie mit einem Brenngas und/oder mit einem flüssigen Kraftstoff betrieben werden kann und trotzdem reduzierte Emissionen und einen reduzierten Verbrauch aufweist. Dies wird erfindungsgemäß dadurch erreicht, dass die Brennkraftmaschine eine Gaseinblaseinrichtung aufweist, welche am Brennraum angeordnet ist, um direkt ein Brenngas in den Brennraum einzublasen. Ferner ist eine Kraftstoffeinspritzeinrichtung zur Einspritzung eines flüssigen Kraftstoffs vorgesehen, welche an einem Saugrohr der Brennkraftmaschine angeordnet ist, und eine Einspritzung des flüssigen Kraftstoffs in das Saugrohr für eine äußere Gemischbildung durchführt. Somit können erfindungsgemäß die Vorteile einer direkten Zuführung des Kraftstoffs in den Brennraum und die Vorteile der Verwendung eines Brenngases, wie beispielsweise Erdgas, als kostengünstiger Brennstoff kombiniert werden. Hauptbrennstoff bei der erfindungsgemäßen Brennkraftmaschine ist dabei vorzugsweise das Brenngas, wobei die Kraftstoffeinspritzeinrichtung vorzugsweise nur beim Starten oder als Notbetrieb vorgesehen ist.

Die Unteransprüche zeigen bevorzugte Weiterbildungen der Erfindung.

Vorzugsweise ist die Gaseinblaseinrichtung im Brennraum benachbart zum Einlassventil angeordnet. Hierdurch kann insbesondere eine optimale Vermischung mit der durch das Einlassventil zugeführten Verbrennungsluft erreicht werden.

Weiter bevorzugt umfasst die Brennkraftmaschine genau eine Kraftstoffeinspritzeinrichtung am Saugrohr. Hierdurch können einerseits die Kosten für die Ausrüstung mit der Kraftstoffeinspritzeinrichtung reduziert werden und andererseits kann eine zentrale äußere Gemischbildung bei einer Verwendung einer einzigen Kraftstoff einspritzeinrichtung sichergestellt werden. Die Kraftstoffeinspritzeinrichtung kann dabei besonders einfach aufgebaut und kostengünstig sein, da diese vorzugsweise lediglich beim Starten der Brennkraftmaschine und/oder für einen Notbetrieb verwendet werden soll. Weiter bevorzugt ist dabei auch nur ein kleiner Kraftstoffbehälter für den flüssigen Kraftstoff, z.B. mit einem Volumen von 15 1 oder weniger, vorgesehen.

Weiter bevorzugt umfasst die Brennkraftmaschine eine Steuereinrichtung, welche die Betriebsstrategie der Brennkraftmaschine steuert. Die Brennkraftmaschine kann grundsätzlich nur im Gasbetrieb oder nur im flüssigen Kraftstoffbetrieb oder in einem kombinierten Betrieb, in welchem sowohl Brenngas als auch flüssiger Kraftstoff verbrannt wird, betrieben werden. Die Speichereinrichtung schaltet dabei periodisch oder betriebspunktabhängig oder beim Starten der Brennkraftmaschine kurzzeitig nur auf das Einblasen von Brenngas oder nur auf das Einspritzen von flüssigem Kraftstoff um. Hierdurch soll sichergestellt werden, dass in vorbestimmten Abständen zumindest kurzzeitig sowohl die Gaseinblaseinrichtung als auch die Kraftstoffeinspritzeinrichtung betätigt werden. Dadurch werden insbesondere hohe thermische Belastungen vermieden. Ferner können dadurch insbesondere im Brennraum Ablagerungen an der Gaseinblaseinrichtung vermieden werden. Beim flüssigen Kraftstoff können insbesondere eine Dampfblasenbildung durch Aufheizen des Kraftstoffs oder eine Verflüchtigung niedrig siedender Kraftstoffbestandteile vermieden werden.

Besonders bevorzugt steuert die Steuereinrichtung ein betriebspunktabhängiges Umschalten auf nur das Einblasen von Brenngas oder nur das Einspritzen von Kraftstoff basierend auf einem vorbestimmten Lastwert oder einem vorbestimmten Drehzahlwert oder einem vorbestimmten Druckwert oder einer vorbestimmten Temperatur. Hierzu umfasst die Brennkraftmaschine entsprechende Sensoren, um die jeweiligen Werte zu erfassen, wobei die Steuereinrichtung einen Speicher umfasst, in welchem die vorgegebenen Werte abgespeichert sind und ein Vergleich der abgespeicherten Werte mit den erfassten Werten erfolgt. Das Vergleichsergebnis dient dann zur Steuerung des Umschaltzeitpunkts.

Weiter bevorzugt nimmt die Steuereinrichtung eine Steuerung der Brennkraftmaschine derart vor, dass in einem oberen Teillastbereich und in einem Volllastbereich das Einblasen des Brenngases gegen Ende eines Ansaugtaktes oder zu Beginn eines Kompressionstaktes der Brennkraftmaschine beginnt.

Gemäß einer weiteren bevorzugten Ausgestaltung der Erfindung umfasst die Brennkraftmaschine eine Verdichtereinrichtung, um eine Aufladung der durch das Saugrohr zugeführten Luft zu ermöglichen.

Um die erforderlichen großen Durchlässe des gasförmigen Brennstoffs zu ermöglichen, weist die Gaseinblaseinrichtung vorzugsweise ein nach außen öffnendes Ventilglied auf.

Ferner betrifft die vorliegende Erfindung ein Verfahren zum Betreiben einer Brennkraftmaschine mit einer Gaseinblaseinrichtung, welche ein Brenngas direkt in einen Brennraum einbläst und einer Kraftstoffeinspritzeinrichtung, welche einen flüssigen Kraftstoff in ein Saugrohr einspritzt. Das Einblasen von Brenngas in den Brennraum und das Einspritzen von Kraftstoff in das Saugrohr kann dabei jeweils unabhängig voneinander oder auch gemeinsam erfolgen.

Bei dem erfindungsgemäßen Verfahren wird besonders bevorzugt beim Starten der Brennkraftmaschine eine Einblasung in den Brennraum und gleichzeitig eine Einspritzung des flüssigen Kraftstoffs in das Saugrohr ausgeführt.

Weiter bevorzugt wird bei dem erfindungsgemäßen Verfahren eine Betriebsstrategie zum Betreiben der Brennkraftmaschine, d.h. ob nur eine Gaseinblasung oder nur eine Kraftstoffeinspritzung oder beides gemeinsam erfolgt, betriebspunktabhängig durchgeführt, beispielsweise wenn ein vorbestimmter Lastwert oder ein vorbestimmter Drehzahlwert oder ein vorbestimmter Temperaturwert oder ein vorbestimmter Druckwert erreicht wird. Eine Umschaltung zwischen den drei möglichen Betriebsarten ist dabei besonders bevorzugt kurzzeitig, d.h. im Bereich von wenigen Sekunden, z.B. 5 bis 10 Sekunden.

Die erfindungsgemäße Brennkraftmaschine wird besonders bevorzugt in Fahrzeugen verwendet. Hierbei kann erfindungsgemäß die Verwendung eines gasförmigen Brennstoffs für die Brennkraftmaschine sichergestellt werden, welcher kostengünstig ist, und nur beim Starten der Brennkraftmaschine oder in einer Notsituation, z.B. wenn im Fahrzeug kein gasförmiger Brennstoff mehr vorhanden ist, auf den flüssigen Kraftstoff umgeschaltet werden. Eine Umschaltung zwischen den beiden Antriebsarten kann dabei problemlos während des Betriebs der Brennkraftmaschine durchgeführt werden. Auch ein gleichzeitiger Betrieb beider Brennstoffsysteme ist problemlos möglich, da diese autark voneinander vorgesehen sind.

### Zeichnung

Nachfolgend wird unter Bezugnahme auf die begleitende Zeichnung ein Ausführungsbeispiel der Erfindung im Detail beschrieben. In der Zeichnung ist:

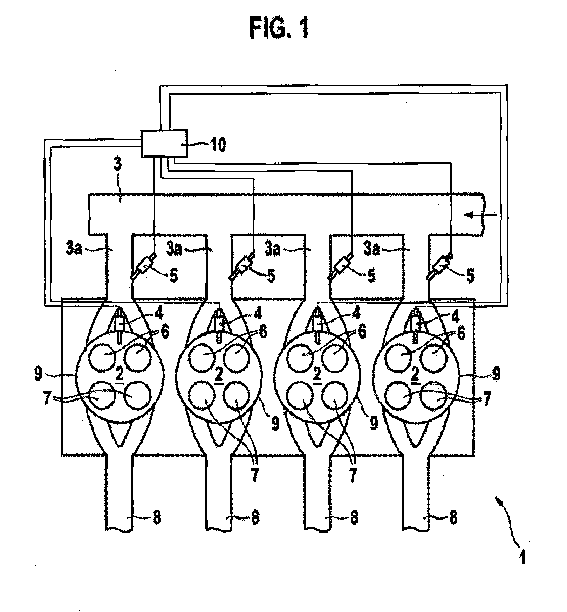

- Figur 1: eine schematische Darstellung einer Brennkraftmaschine gemäß einem Ausführungsbeispiel der Erfindung.

### Bevorzugte Ausführungsform der Erfindung

Nachfolgend wird unter Bezugnahme auf Figur 1 eine Brennkraftmaschine 1 gemäß einem bevorzugten Ausführungsbeispiel im Detail beschrieben.

Figur 1 zeigt schematisch eine Brennkraftmaschine mit vier Zylindern 9, welche als Ottomotor ausgelegt ist. Die Brennkraftmaschine 1 umfasst ein Saugrohr 3, vier Brennräume 2, welche jeweils in einem der vier Zylinder 9 angeordnet sind, jeweils zwei Einlassventile 6 pro Zylinder und jeweils zwei Auslassventile 7 pro Zylinder. Das Bezugszeichen 8 kennzeichnet jeweils einen Auslasskanal aus den Zylindern 9. Die Brennkraftmaschine 1 umfasst ferner jeweils eine Gaseinblaseinrichtung 4 je Zylinder, welche zur direkten Einblasung eines Brenngases, z.B. Erdgas, in den Brennraum 2 vorgesehen ist. Weiter umfasst die Brennkraftmaschine vier Kraftstoffeinspritzeinrichtungen 5, welche jeweils um einen Zufuhrkanal 3a aus dem Saugrohr 3 angeordnet sind, um einen flüssigen Kraftstoff in den Zufuhrkanal 3a einzuspritzen. Eine Steuerungs- bzw, Regelungseinrichtung 10 steuert dabei das Öffnen und Schließen der Gaseinblaseinrichtungen 4 und der Kraftstoffeinspritzeinrichtungen 5.

Die erfindungsgemäße Brennkraftmaschine 1 ist somit ein bivalenter Verbrennungsmotor mit einer Gasdirekteinblasung und einer Benzin-Saugrohreinspritzung. Die Gaseinblaseinrichtungen 4 sind dabei spezielle Gasinjektoren. Die Kraftstoffeinspritzeinrichtungen 5 sind einfach aufgebaute Benzin-Injektoren. Die Kraftstoffeinspritzeinrichtungen 5 können dabei besonders einfach und kostengünstig aufgebaut sein, da sie lediglich bei einem Start der Brennkraftmaschine 1 und/oder für einen Notbetrieb, z.B. wenn der gasförmige Brennstoff ausgegangen ist, verwendet werden. Insofern kann auch nur ein kleiner Kraftstoffbehälter für den flüssigen Kraftstoff vorgesehen werden. Da der flüssige Kraftstoff nur in Ausnahmefällen verwendet wird, kann die Brennkraftmaschine 1 ganz auf eine Optimierung bei einem Betrieb mit gasförmigem Brennstoff ausgelegt werden. Da die Gaseinblaseinrichtungen 4 im Bereich der Einlassventile 6 angeordnet sind, können diese in einer seitlichen Einbaulage eingebaut werden. Ein Einblasdruck für das Brenngas beträgt dabei vorzugsweise unter 20 x 105 Pa. Die Gaseinblaseinrichtungen 4 umfassen nach außen öffnende Ventilglieder. Für eine optimale Verbrauchs- und Emissionscharakteristik erfolgt eine Einblasung des Brenngases in einem unteren Teillastbereich während der Ansaugphase. In einem oberen Teillastbereich und bei Volllast beginnt das Einblasen des Brenngases vorzugsweise gegen Ende des Ansaugtaktes oder zu Beginn des Kompressionstaktes.

Um einen Austausch des flüssigen Kraftstoffs, welcher vorne am Kraftstoffeinspritzventil 5 ansteht, von Zeit zu Zeit zu gewährleisten, erfolgt vorzugsweise ein kurzzeitiges Umschalten oder Zuschalten auf die Kraftstoffeinspritzung. Hierdurch können insbesondere hohe thermische Belastungen der Kraftstoff einspritzeinrichtungen 5 vermieden werden, da nur beim Gasbetrieb eine Kühlung der Kraftstoffeinspritzeinrichtungen 5 durch durchlaufenden Kraftstoff entfällt. Es sei angemerkt, dass das kurzzeitige Um- oder Zuschalten der Einspritzung von flüssigem Kraftstoff periodisch erfolgen kann, beispielsweise nach einer bestimmten Laufzeit der Brennkraftmaschine oder nach einer vorbestimmten Anzahl von Motorumdrehungen. Ferner kann das kurzzeitige Um- oder Zuschalten auch betriebspunktabhängig erfolgen, beispielsweise bei Erreichen von vorbestimmten Last- und/oder Drehzahl- und/oder Druck- und/oder Temperaturwerten.

Wenn nur ein Betrieb mit flüssigem Kraftstoff durchgeführt wird, kann ebenfalls ein kurzzeitiges Umschalten oder ein kurzzeitiges Zuschalten der Gaseinblasung durchgeführt werden, um einen Austausch des an der Gaseinblaseinrichtung anliegenden Brenngases zu gewährleisten und die Gaseinblaseinrichtung 4 durch neu nachströmendes Brenngas zu kühlen. Auch hierbei kann das kurzzeitige Um- oder Zuschalten periodisch oder betriebspunktabhängig erfolgen. Das Umschalten bzw. Zuschalten des jeweils anderen Brennstoffsystems vermeidet somit Schäden, insbesondere thermische Schäden an dem jeweiligen System.

Es sei angemerkt, dass die Brennkraftmaschine auch mit einer Aufladung mit einem Verdichtungsverhältnis größer 10 betrieben werden kann. Bei dem in Figur 1 dargestellten Saugmotor beträgt das Verdichtungsverhältnis über 11. Dadurch kann die Brennkraftmaschine eine hohe Leistung bei geringem Verbrauch und niedrigen Emissionswerten erreichen.

## Patentansprüche

1. Brennkraftmaschine, umfassend einen Brennraum (2), ein Saugrohr (3, 3a), wenigstens ein Einlassventil (6), wenigstens ein Auslassventil (7), eine Gaseinblaseinrichtung (4), welche am Brennraum (2) zum direkten Einblasen eines Brenngases in den Brennraum (2) angeordnet ist, und eine Kraftstoffeinspritzeinrichtung (5), welche am Saugrohr (3, 3a) zur Einspritzung eines flüssigen Kraftstoffs in das Saugrohr angeordnet ist.

2. Brennkraftmaschine nach Anspruch 1, **dadurch gekennzeichnet, dass** die Gaseinblaseinrichtung (4) im Brennraum (2) benachbart zum Einlassventil (6) angeordnet ist.

3. Brennkraftmaschine nach einem der vorhergehenden Ansprüche, umfassend genau eine Kraftstoffeinspritzeinrichtung für eine zentrale äußere Gemischbildung im Saugrohr (3, 3a).

4. Brennkraftmaschine nach einem der vorhergehenden Ansprüche, ferner umfassend eine Steuereinrichtung (10), welche periodisch oder betriebspunktabhängig oder beim Starten der Brennkraftmaschine kurzzeitig nur auf das Einblasen von Brenngas oder nur auf das Einspritzen von Kraftstoff oder auf ein gleichzeitiges Einblasen von Brenngas und Einspritzen von Kraftstoff umschaltet.

5. Brennkraftmaschine nach Anspruch 4, **dadurch gekennzeichnet, dass** die Steuereinrichtung (10) das betriebspunktabhängige Umschalten oder Zuschalten auf nur das Einblasen von Brenngas oder nur das Einspritzen von Kraftstoff bei einem vorbestimmten Lastwert oder bei einem vorbestimmten Drehzahlwert oder bei einem vorbestimmten Druckwert oder bei einer vorbestimmten Temperatur ausführt.

6. Brennkraftmaschine nach Anspruch 4 oder 5, **dadurch gekennzeichnet, dass** die Steuereinrichtung (10) eine Steuerung der Brennkraftmaschine derart vornimmt, dass in einem oberen Teillastbereich und in einem Volllastbereich das Einblasen des Brenngases gegen Ende des Ansaugtaktes oder zu Beginn des Kompressionstaktes beginnt.

7. Brennkraftmaschine nach einem der vorhergehenden Ansprüche, ferner umfassend eine Verdichtereinrichtung, um eine Aufladung im Saugrohr (3, 3a) bereitzustellen.

8. Brennkraftmaschine nach einem der vorhergehenden Ansprüche, **dadurch gekennzeichnet, dass** die Gaseinblaseinrichtung (4) ein nach außen öffnendes Ventilglied umfasst.

9. Verfahren zum Betreiben einer Brennkraftmaschine (1) mit einer Gaseinblaseinrichtung (4), welche ein Brenngas direkt in einen Brennraum (2) einbläst, und mit einer Kraftstoffeinspritzeinrichtung (5), welche einen flüssigen Kraftstoff in ein Saugrohr (3, 3a) einspritzt, wobei die Einblasung von Brenngas und das Einspritzen von Kraftstoff jeweils unabhängig voneinander oder gemeinsam erfolgt.

10. Verfahren nach Anspruch 9, **dadurch gekennzeichnet, dass** beim Starten der Brennkraftmaschine eine Einblasung von Brenngas in den Brennraum (2) und gleichzeitig eine Einspritzung von flüssigem Kraftstoff in das Saugrohr (3, 3a) erfolgt.

11. Verfahren nach Anspruch 9 oder 10, **dadurch gekennzeichnet, dass** ein Zuschalten oder Umschalten der Kraftstoffeinspritzeinrichtung (5) oder der Gaseinblaseinrichtung (4) periodisch oder betriebspunktabhängig, insbesondere bei Erreichen eines vorbestimmten Lastwertes und/oder eines vorbestimmten Drehzahlwertes und/oder eines vorbestimmten Temperaturwertes und/oder eines vorbestimmten Druckwertes, erfolgt.
